Europäisches Patentamt

European Patent Office

Office européen des brevets

(11) Veröffentlichungsnummer: **0 250 929**
**B1**

(12) **EUROPÄISCHE PATENTSCHRIFT**

(45) Veröffentlichungstag der Patentschrift:
20.06.90

(21) Anmeldenummer: 87108157.6

(22) Anmeldetag: 05.06.87

(51) Int. Cl.⁵: **F16D 65/56**, B61H 13/00,
B61H 15/00, B60T 17/08

(54) Montage- und Demontageeinrichtung für eine Bremsbetätigungseinheit.

(30) Priorität: 27.06.86 DE 3621637

(43) Veröffentlichungstag der Anmeldung:
07.01.88 Patentblatt 88/1

(45) Bekanntmachung des Hinweises auf die Patenterteilung:
20.06.90 Patentblatt 90/25

(84) Benannte Vertragsstaaten:
AT CH DE ES FR GB IT LI SE

(56) Entgegenhaltungen:
DE-B- 2 201 082
FR-A- 2 366 967
US-A- 3 100 032

(73) Patentinhaber: Bergische Stahl-Industrie,
Papenbergerstrasse 38, D-5630 Remscheid(DE)

(72) Erfinder: Rocholl, Hans, Damaschkestrasse 17a,
D-5630 Remscheid(DE)
Erfinder: Klein, Horst, Erlenstrasse 23,
D-5630 Remscheid(DE)

(74) Vertreter: Jung, Hermann L., Dipl.-Chem.,
Postfach 1728 Augusta-Allee 10, D-6380 Bad Homburg
v.d.H.(DE)

ACTORUM AG

**Beschreibung**

Die Erfindung betrifft eine Montage- und Demontageeinrichtung für die Betätigungsfeder einer selbsttätigen Schraubspindel-Mutter-Nachstellvorrichtung einer Bremsbetätigungseinheit, insbesondere für Schienenfahrzeuge, bei der die Betätigungsfeder einerseits am Abtriebskopf und andererseits am Kolben des hydraulischen oder pneumatischen Zylinders über Zwischenglieder anliegt und auf die Bremskraft vorgespannt ist, wobei die Betätigungsfeder radial zwischen einem mit dem Abtriebskopf verbundenen äusseren Rohr und einem dazu konzentrischen inneren Rohr liegt.

Derartige Bremsen sind beispielsweise aus der DE-B 2 201 082 bekannt. Der Nachteil dieser Bremsen besteht darin, dass beim Zusammenbau, aber auch beim Auseinanderbauen einer solchen Bremse die Betätigungsfeder auf eine relativ hohe Kraft vorgespannt ist, so dass immer Hilfseinrichtungen verwendet werden müssen. Weiter ist aus US-A 3 100 032 oder FR-A 2 366 967 bekannt, vorgespannte Schraubenfedern in Bremsbetätigungseinheiten durch radial eingreifende Zapfen oder Bolzen in ihrer Bewegung zu hindern, aber es ist nicht möglich, damit die Nachstelleinrichtung im gespannten Zustand auseinander- oder gar zusammenzubauen.

Der Erfindung liegt daher die Aufgabe zugrunde, eine Vorrichtung der gattungsgemässen Art zu schaffen, die es ermöglicht, die Betätigungsfeder der Nachstelleinrichtung in gespanntem Zustand zu belassen, wenn die Nachstelleinrichtung auseinander- oder zusammengebaut werden soll.

Die Lösung dieser Aufgabe besteht darin, dass zwischen dem äusseren Rohr und der Betätigungsfeder eine Hülse angeordnet ist, deren Länge etwa der Federlänge entspricht, welche Hülse mit einem nach innen weisenden Flansch in axialer Richtung am dem Kolben zugewandten Ende der Feder anliegt und mittels einer sich in eine Öffnung des äusseren Rohres einschraub- bzw. einsteckbaren und sich in einen Schlitz der Hülse erstreckenden radialen Schraube, Stift oder dergl. axial festlegbar ist.

Vorteilhaft verläuft der Schlitz in der Hülse achsparallel und die Länge des Schlitzes entspricht der Verlängerung der Betätigungsfeder am Ende der Verschleissnachstellung.

Der Vorteil liegt auf der Hand. Wird die Hülse mit dem radialen Stift oder Schraube im Rohr festgelegt, so kann sich die Feder beim Auseinanderbauen nicht mehr unkontrolliert entspannen, wodurch sicher Verletzungen vermieden werden. Auch der Zusammenbau der Vorrichtung wird mit der Erfindung wesentlich erleichtert.

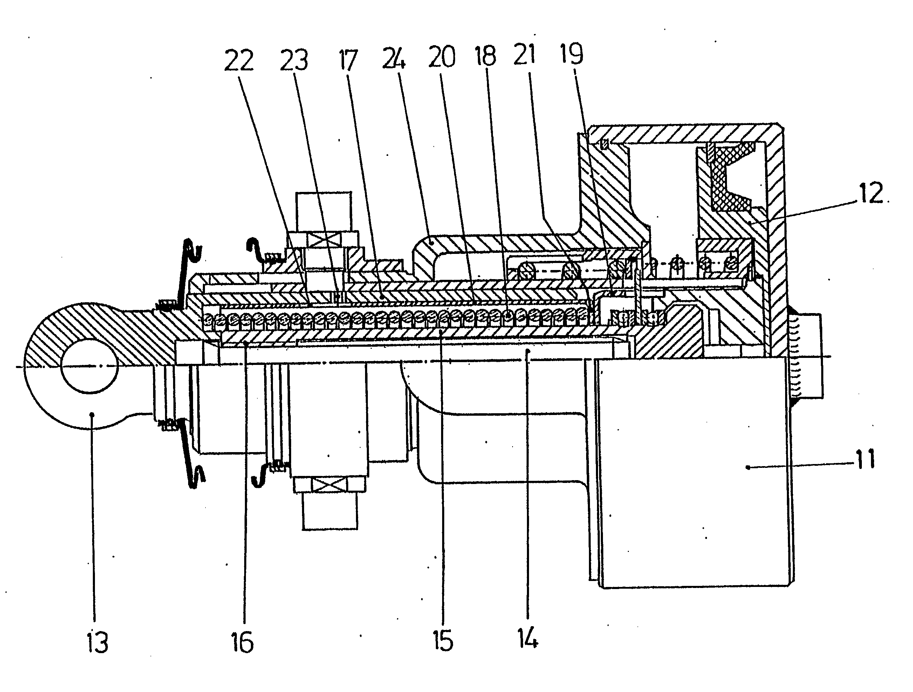

In der Zeichnung ist eine beispielsweise Ausführungsform der erfindungsgemässen Vorrichtung dargestellt, wobei auf der einen Seite ein Betätigungszylinder 11 mit einem Kolben 12 angeordnet ist, und auf der anderen Seite der Abtriebskopf 13, z.B. mit einem Bremsbelag verbunden ist. Zwischen dem Kopf 13 und dem Zylinder 11 ist eine Spindel 14 angeordnet, auf der ein inneres Rohr 15 mit der Mutter 16 liegt. Der Kopf 13 trägt ein äusseres Rohr 17, welches sich bis fast an den Kolben 12 des Zylinders 11 erstreckt. Zwischen den beiden Rohren 15 und 17 liegt die Betätigungsfeder 18, welche vorgespannt ist und sich einerseits am Abtriebskopf 13 und andererseits über ein Zwischenstück 19 am Kolben 12 abstützt. In der Zeichnung ist die Feder im Anfangszustand dargestellt. Infolge der Nachstellung des Verschleisses wird die Feder 18 im Laufe der Zeit immer länger, und zwar solange, bis die Bremsbeläge vollständig verschlissen sind. An der Innenwand des äusseren Rohres 17 liegt eine Hülse 20 mit Gleitsitz an, deren dem Zylinder 11 zugewandten einen nach innen abgekröpften Flansch 21 trägt. Der Flansch 21 erstreckt sich fast bis zum inneren Rohr 16 und liegt dann zwischen der Feder 18 und dem Zwischenstück 19. Am vorderen Ende reicht die Hülse 20 fast bis zum Kopf 13. In der Nähe des Endes der Hülse 20 ist ein Längsschlitz 22 angeordnet, welcher mit einer Öffnung 23 im äusseren Rohr 17 korrespondiert. Die Öffnung 23 kann ein Innengewinde tragen. In neuem Zustand, das heisst wenn die Bremsbetätigungseinheit noch keine Nachstellung durchgeführt hat (was in der Zeichnung dargestellt ist) liegt die Öffnung 23 in dem äusseren Rohr 17 etwa am dem Zylinder 11 zugewandten Ende des Schlitzes 22. Im Laufe der Nachstellungen wandert die Öffnung 23 immer weiter zum anderen Ende des Schlitzes 22.

Zur Montage der Feder 18 wird diese mit dem Flansch 21 der im äusseren Rohr 17 eingesteckten Hülse 20 zusammengedrückt, bis der Schlitz 22 der Hülse 20 vor der Öffnung 23 im äusseren Rohr 17 zu liegen kommt. Jetzt kann entweder ein Stift in die Öffnung 23 und den Schlitz 22 gesteck oder eine Schraube in der Öffnung 23 soweit eingeschraubt werden, bis sie in den Schlitz 22 eingedrungen ist. Nun kann sich die Hülse 20 unter dem Einfluss der Kraft der Feder 18 nicht mehr aus dem äusseren Rohr 17 herausschieben, sondern alle Teile können ohne Schwierigkeit in das Gehäuse 24 hineingeschoben werden und dort mit dem Kolben 12 verbunden werden.

Wenn die Verschleissnachstellung an ihrem Endpunkt angekommen ist, hat sich die Betätigungsfeder 18 ein Stück gelängt, weil der Kopf 13 mit dem äusseren Rohr 17 um den Nachstellbetrag vom Zylinder 11 wegbewegt wurde. Da die Hülse 20 aber von der Feder 18 mit dem Flansch 21 gegen das Zwischenstück 19 gedrückt wird und daher im Verhältnis zum äusseren Rohr 17 stehenbleibt, verschiebt sich die Öffnung 23 an das entgegengesetzte Ende des Schlitzes 22. Für die Demontage kann jetzt durch die Öffnung 23 eine Schraube oder ein Stift bis in den Schlitz 22 eingeführt werden, wodurch die Betätigungsfeder 18 beim Auseinandernehmen der Vorrichtung nicht mehr die Hülse 20 am Flansch 21 hinausdrücken kann, weil der Schlitz 22 die Hülse 20 an seinem Ende an der Schraube oder dem Stift arretiert. Die Betätigungsfeder 18 bleibt also gespannt, obwohl die nicht mehr am Zwischenstück 19 anliegt.

In Sonderfällen können entlang dem äusseren Rohr 17 mehrere Öffnungen im Abstand von einander vorgesehen werden.

Die Hülse 20 kann im Rahmen der Erfindung die verschiedensten Formen annehmen. Sie kann z.B.

aus einzelnen Längsstreifen bestehen, welche durch einen oder mehrere Ringe zu einer Einheit zusammengehalten werden, wobei in einem Streifen der Schlitz 22 angeordnet ist. Sie kann aber auch aus nur zwei breiteren Längsstreifen bestehen, welche diametral zueinander liegen und mit einem Ring zu einer Einheit zusammengefasst sind.

Es ist auch nicht unbedingt notwendig, den Flansch 21 als ein rundum laufendes Teil vorzusehen, sondern es genügt auch, bei einer geschlossenen Hülse 20 einzelne Abkröpfungen vorzusehen, an denen sich die Feder 18 abstützen kann.

## Patentansprüche

1. Montage- und Demontageeinrichtung für die Betätigungsfeder (18) einer selbsttätigen Schraubspindel-Mutter-Nachstellvorrichtung einer Bremsbetätigungseinheit, insbesondere für Schienenfahrzeuge, bei der die Betätigungsfeder (18) einerseits am Abtriebskopf (13) und andererseits am Kolben (12) des hydraulischen oder pneumatischen Zylinders (11) über Zwischenglieder (19, 21) anliegt und auf die Bremskraft vorgespannt ist, wobei die Betätigungsfeder (18) radial zwischen einem mit dem Abtriebskopf (13) verbundenen äusseren Rohr (17) und einem dazu konzentrischen inneren Rohr (15) liegt, dadurch gekennzeichnet, dass zwischen dem äusseren Rohr (17) und der Betätigungsfeder (18) eine Hülse (20) angeordnet ist, deren Länge etwa der Federlänge entspricht, welche Hülse mit einem nach innen weisenden Flansch (21) in axialer Richtung an dem Kolben (12) zugewandten Ende der Betätigungsfeder (18) anliegt und mittels einer sich in eine Öffnung (23) des äusseren Rohres (17) einschraub- bzw. einsteckbaren und sich in einen Schlitz (22) der Hülse erstreckenden radialen Schraube, Stift oder derg. axial festlegbar ist.

2. Einrichtung nach Anspruch 1, dadurch gekennzeichnet, dass der Schlitz (22) in der Hülse (20) achsparallel verläuft.

3. Einrichtung nach Anspruch 1 oder 2, dadurch gekennzeichnet, dass die Länge des Schlitzes (22) der Verlängerung der Betätigungsfeder (18) am Ende der Verschleissnachstellung entspricht.

4. Einrichtung nach einem der Ansprüche 1 bis 3, dadurch gekennzeichnet, dass die Hülse (20) aus mehreren Streifen besteht, welche mit einem Ring untereinander verbunden sind.

5. Einrichtung nach einem der Ansprüche 1 bis 4, dadurch gekennzeichnet, dass entlang des äusseren Rohres (17) mehrere Öffnungen (23) im Abstand voneinander vorgesehen sind.

## Claims

1. Assembly and disassembly arrangement for the actuating spring (18) of an automatic threaded spindle/nut readjusting device of a brake-actuating unit, in particular for rail vehicles, in which the actuating spring (18) on the one hand rests against the output head (13) and on the other hand rests via intermediate members (19, 21) against the piston (12) of the hydraulic or pneumatic cylinder (11) and is prestressed to the braking force, the actuating spring (18) being situated radially between an outer tube (17) connected to the output head (13) and an inner tube (15) concentric to said outer tube, characterized in that a sleeve (20), the length of which corresponds approximately to the length of the spring, is arranged between the outer tube (17) and the actuating spring (18), which sleeve rests axially by an inward-pointing flange (21) against that end of the actuating spring (18) which faces the piston (12), and can be fixed axially by means of a radial screw, pin or the like which can be screwed or inserted into an opening (23) in the outer tube (17) and extends into a slot (22 ) in the sleeve.

2. Arrangement according to claim 1, characterized in that the slot (22) in the sleeve (20) runs parallel to the axis.

3. Arrangement according to claim 1 or 2, characterized in that the length of the slot (22) corresponds to the extension of the actuating spring (18) at the end of the readjustment for wear.

4. Arrangement according to one of claims 1 to 3, characterized in that the sleeve (20) comprises a plurality of strips which are connected to one another by a ring.

5. Arrangement according to one of claims 1 to 4, characterized in that a plurality of spaced openings (23) is provided along the outer tube (17).

## Revendications

1. Dispositif de montage et démontage du ressort d'actionnement (18) d'un dispositif de rattrapage automatique d'usure par un écrou sur broche filetée d'une unité d'actionnement de frein, pour véhicules ferroviaires en particulier, le ressort d'actionnement (18) s'appuyant d'une part contre la tête de prise de force (13) et d'autre part contre le piston (12) du vérin (11) hydraulique ou pneumatique via des pièce intermédiaires (19, 21) et étant précontraint à la force de freinage, le ressort d'actionnement (18) se trouvant sur un plan radial entre un tube extérieur (17) relié à la tête de prise de force (13) et un tube intérieur (15) concentrique, caractérisé en ce qu'entre le tube extérieur (17) et le ressort d'actionnement (18) se trouve une douille (20) dont la longueur correspond approximativement à celle du ressort, la douille (20) s'appliquant dans le sens axial par le biais d'un flasque regardant vers l'intérieur (21) contre l'extrémité du ressort (18) tournée vers le piston (12), et étant (20) immobilisable sur le plan axial au moyen d'une vis, goupille ou assimilée axiale, vissable ou enfichable dans un orifice (23) du tube extérieur (17) et passant par une fente (22) de la douille.

2. Dispositif selon revendication 1, caractérisé en ce que la fente (22) de la douille est parallèle à l'axe.

3. Dispositif selon revendication 1 ou 2, caractérisé en ce que la longueur de la fente (22) correspond à l'allongement du ressort d'actionnement (18) une fois atteinte l'extrémité du rattrapage d'usure.

4. Dispositif selon l'une des revendications 1 à 3, caractérisé en ce que la douille (20) se compose de plusieurs bandes reliées entre elles par un anneau.

5. Dispositif selon l'une des revendications 1 à 4, caractérisé en ce que le long du tube extérieur (17) sont prévus des orifices (23) distants les uns des autres.